Europäisches Patentamt

European Patent Office

Office européen des brevets

(19)

(11) Veröffentlichungsnummer: **0 189 100**
**B1**

(12) EUROPÄISCHE PATENTSCHRIFT

(45) Veröffentlichungstag der Patentschrift: **18.07.90**

(51) Int. Cl.⁵: **B 60 N 2/02,** B 60 N 3/02, F 16 B 12/34

(21) Anmeldenummer: **86100433.1**

(22) Anmeldetag: **15.01.86**

(54) Bauteil mit einem daran befestigten Zugglied.

(30) Priorität: **18.01.85 DE 3501483**

(43) Veröffentlichungstag der Anmeldung:
**30.07.86 Patentblatt 86/31**

(45) Bekanntmachung des Hinweises auf die
Patenterteilung:
**18.07.90 Patentblatt 90/29**

(84) Benannte Vertragsstaaten:
**DE FR GB IT**

(56) Entgegenhaltungen:
**DE-A-2 623 602**
**DE-B-1 246 435**

(73) Patentinhaber: **Adam Opel Aktiengesellschaft**
**Bahnhofsplatz 1 Postfach 1560**
**D-6090 Rüsselsheim (DE)**

(72) Erfinder: **Bolz, Richard, Dipl.-Ing. (FH)**
**Kirschgartenstrasse 6**
**D-6093 Flörsheim 3 (DE)**

(74) Vertreter: **Rosenfeld, Jürgen, Dipl. Ing. et al**
**Adam Opel Ag Patentabteilung Bahnhofsplatz 1**
**Postfach 17 10**
**D-6090 Rüsselsheim (DE)**

## Beschreibung

Die Erfindung bezieht sich auf ein Bauteil mit einem daran befestigten Zugglied, insbesondere Sitzteil für einen Hintersitz eines Kraftfahrzeuges.

Um ein Sitzteil nach vorn klappen zu können, befestigt man üblicherweise an seiner Rückseite als Zugglied eine Schlaufe, an der man zum Klappen des Sitzteiles ziehen kann. Solche Schlaufen können sich auch an anderen Bauteilen befinden, beispielsweise an Mittelarmlehnen von Kraftfahrzeugen oder an Verriegelungsmechanismen. Bislang hat man im Kraftfahrzeugbereich Zugglieder dieser Art jeweils mittels zweier Blechschrauben am jeweiligen Bauteil befestigt, wobei zwei Schrauben notwendig sind, damit das Zugglied vor Verdrehen gesichert ist. Diese Art der Befestigung beansprucht bei der Montage beträchtlichen Zeitaufwand und ist deshalb relativ teuer. Da solche Zugglieder jedoch relativ stark belastet sind, hat man bislang keine kostengünstigere Möglichkeit der Verbindung des Zuggliedes mit dem zugehörigen Bauteil gefunden.

Der Erfindung liegt die Aufgabe zugrunde, ein ein Zugglied aufweisendes Bauteil der eingangs genannten Art derart auszubilden, daß das Zugglied mit möglichst geringem Aufwand fest und verdrehsicher mit dem Bauteil verbunden ist.

Diese Aufgabe wird erfindungsgemäß dadurch gelöst, daß in einem Wandbereich des Bauteils ein in eine Erweiterung mündendes Langloch vorgesehen ist, daß das Zugglied mit einem in die Erweiterung einsteckbaren Rastkopf am der Erweiterung abgewandten Ende des Langloches sitzt und mit Randbereichen auf der dem Zugglied abgewandten Seite des Wandbereiches über die Breite des Langloches ragt und daß an dem Rastkopf eine elastische Lasche mit einem in die Erweiterung greifenden Sicherungsnoppen vorgesehen ist.

Durch diese Gestaltung kann das Zugglied ohne Werkzeug einfach mit seinem Rastkopf in die Erweiterung eingesetzt und dann so weit im Langloch verschoben werden, bis der Sicherungsnoppen in der Erweiterung einrastet. Das Zugglied ist dann mit hoher Sicherheit gegen unbeabsichtigtes Lösen formschlüssig mit dem Bauteil verbunden. Damit ist eine einfache, schnelle und kostengünstige Montage möglich. Die Herstellungskosten sind auch deshalb niedrig, weil keine zusätzlichen Befestigungselemente, wie Schrauben oder Nieten, erforderlich sind.

Eine besonders vorteilhafte Ausgestaltung der Erfindung besteht darin, daß der Rastkopf und der Sicherungsnoppen von oben gesehen rechteckig sind und die Erweiterung entsprechend rechteckigen Querschnitt hat und mit dem Langloch einen T-förmigen Durchlaß bildet. Bei dieser Ausführungsform legen sich bei Zugbeanspruchung der Rastkopf und der Sicherungsnoppen mit einer relativ großen Fläche gegen eine seitliche Begrenzung des Langloches bzw. der Erweiterung an, so daß hohe Kräfte ohne übermäßige Beanspruchung des Materials des Zuggliedes übertragen werden können.

Wenn der Rastkopf koaxial zur Längsachse des Zuggliedes angeordnet ist und die Lasche mit dem Sicherungsnoppen quer dazu in einem rechten Winkel zum Zugglied verläuft, dann werden normalerweise alle auftretenden Kräfte vom Rastkopf in den Wandbereich des Bauteils eingeleitet, so daß der Sicherungsnoppen lediglich als Verdrehsicherung und ferner dazu dient, den Rastkopf gegen Verschieben im Langloch zu sichern. Er wird durch die Kräfte am Zugglied nicht derart beansprucht, daß er aus der Erweiterung gelangen könnte und dadurch seine Sicherungsfunktion verlorengeht.

Für das Sitzteil eines Hintersitzes ist es günstig, wenn das Langloch mit der Erweiterung in einer nach innen gerichteten Verprägung des Wandbereiches vorgesehen ist. Durch diese Verprägung wird verhindert, daß das Sitzteil in Gebrauchslage statt auf seiner Sitzschale auf dem Zugglied aufliegt und dieses dadurch verformt oder beschädigt.

Das Einschieben des Rastkopfes in das Langloch geht besonders einfach, wenn im Abstand des Sicherungsnoppens vom Rastkopf neben der Erweiterung in der Verprägung ein um die Höhe des Sicherungsnoppens tieferer Prägebereich vorgesehen ist. Durch diesen tieferen Prägebereich wird erreicht, daß im ersten Moment des Einschnäbelns des Rastkopfes dieser parallel zur Ebene des Langloches ausrichtbar ist.

Die Erfindung läßt zahlreiche Ausführungsformen zu. Zur Verdeutlichung ihres Grundprinzips ist eine davon in der Zeichnung dargestellt und wird nachfolgend beschrieben.

Die Zeichnung zeigt in

Fig. 1 eine räumliche Darstellung eines mit einem Zugglied versehenen Wandbereiches eines Bauteils gemäß der Erfindung,

Fig. 2 einen Querschnitt durch das Bauteil entlang der Linie II - II in Figur 1,

Fig. 3 einen Längsschnitt durch das Bauteil entlang der Linie III - III in Figur 1,

Fig. 4 eine vergrößerte Darstellung eines in Fig. 3 mit IV gekennzeichneten Bereiches des Bauteils,

Fig. 5 eine Draufsicht auf einen Teilbereich der Anordnung gemäß Figur 1, jedoch in Vorverraststellung,

Fig. 6 einen Teilschnitt entlang der Linie VI - VI in Figur 5 in vergrößerter Darstellung.

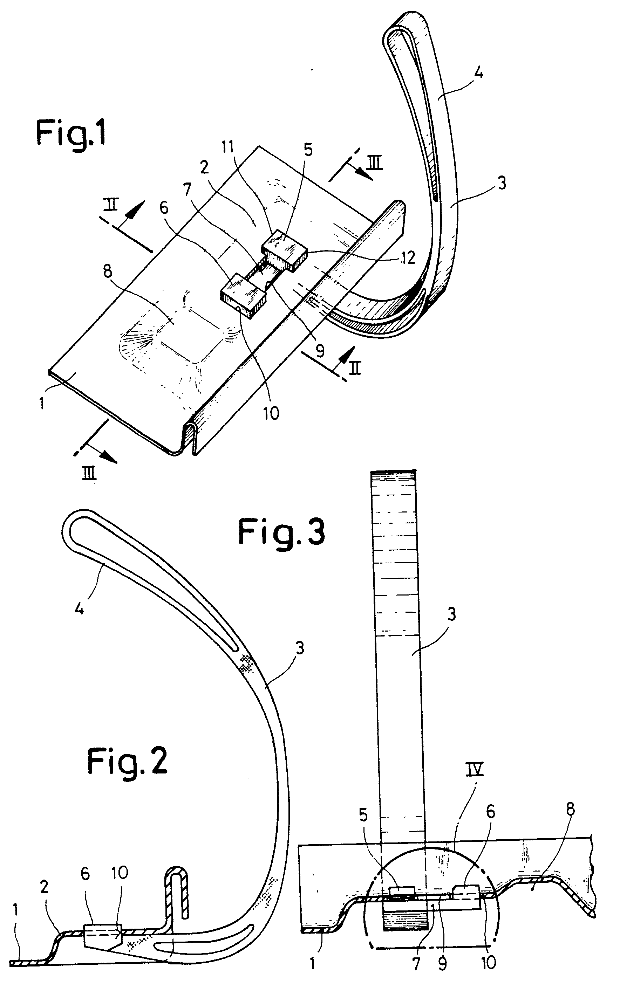

Die Figur 1 zeigt einen Wandbereich 1 aus Stahlblech, bei dem es sich um einen Teil der im übrigen nicht dargestellten Sitzschale eines Sitzteiles eines Hintersitzes eines Kraftfahrzeugs handeln soll. Dieser Wandbereich 1 hat eine nach oben gerichtete Verprägung 2, in der ein Zugglied 3 am Wandbereich 1 befestigt ist. Dieses Zugglied besteht aus einem elastischen Kunststoff und weist an seiner oberen Seite eine Schlaufe 4 auf, in die man greift, um das Sitzteil umzuklappen.

Zur Verbindung mit dem Wandbereich 1 besitzt das Zugglied 3 an seinem unteren Ende fluchtend zu seiner Längsachse einen Rastkopf 5 und in Abstand dazu einen Sicherungsnoppen 6, der mittels einer elastischen Lasche 7 mit dem Rastkopf 5 verbunden ist. In Verlängerung dieser Lasche 7 befindet sich vor dem Sicherungsnoppen 6 ein Prägebereich 8, der weiter nach oben gerichtet ist, als die Verprägung 2.

Wesentlich für die Erfindung ist ein Langloch 9 in der Verprägung 2, welches in eine rechteckige Erweiterung 10 einmündet. Durch diese Erweiterung 10 greift von unten her der Sicherungsnoppen 6. Der Rastkopf 5 sitzt im der Erweiterung 10 gegenüberliegenden Ende des Langloches 9 und greift mit Randbereichen 11, 12 über die seitliche Begrenzung des Langloches 9. Die Größe des Rastkopfes 5 von oben gesehen entspricht der des Sicherungsnoppens 6.

Die Figur 2 zeigt den Wandbereich 1 mit der Verprägung 2 und das Zugglied 3, welches mit dem Sicherungsnoppen 6 in die Erweiterung 10 greift.

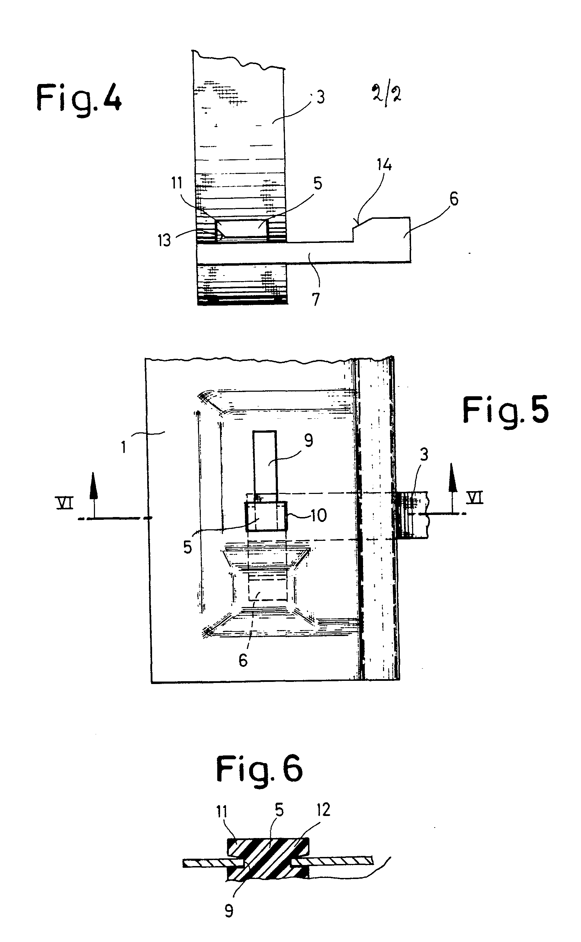

Wie das Zugglied 3 in den Wandbereich 1 eingesetzt wird, ist anhand der Figur 3 leicht zu verstehen. Zunächst steckt man den Rastkopf 5 durch die Erweiterung 10 des Langloches 9. Der Sicherungsnoppen 6 befindet sich dann im Prägebereich 8. Anschließend verschiebt man das Zugglied 3 in Figur 3 gesehen nach links, wobei der Sicherungsnoppen 6 aufgrund der Elastizität der Lasche 7 zunächst nach unten ausweicht und dann seinerseits in die Erweiterung 10 einschnappt. Dadurch wird der Rastkopf 5 daran gehindert, zurück zur Erweiterung 10 zu gelangen. Weiterhin sichert der Sicherungsnoppen 6 das Zugglied vor Verdrehen.

Die Figur 4 läßt den unteren Bereich des Zuggliedes 3 besser erkennen. Gezeigt ist, daß der Randbereich 11 des Rastkopfes 5 eine Einlaufschräge 13 hat, um das Einschieben des Rastkopfes 5 aus der Erweiterung 10 in das Langloch 9 zu erleichtern. Eine entsprechende Einlaufschräge ist natürlich auch am in Figur 4 nicht zu erkennenden Randbereich 12 vorgesehen. Des weiteren besitzt der Sicherungsnoppen 6 an seiner oberen, dem Rastkopf 5 zugewandten Kante eine Abschrägung 14.

In Figur 5 sind das Langloch 9 und die Erweiterung 10, durch die der Rastkopf 5 greift, zu erkennen. Zur endgültigen Verbindung des Zuggliedes 3 mit dem Wandbereich 1 muß man das Zugglied 3 in Figur 5 gesehen nach oben schieben, bis daß der Sicherungsnoppen 6 anstelle des Rastkopfes 5 in die Erweiterung 10 gelangt.

Die Figur 6 zeigt, daß der Rastkopf 5 mit seinen Randbereichen 11, 12 pilzartig über die seitlichen Begrenzungen des Langloches 9 greift und dadurch im Langloch 9 zuverlässig gehalten ist.

**Patentansprüche**

1. Bauteil mit einem daran befestigten Zugglied, insbesondere Sitzteil für einen Hintersitz eines Kraftfahrzeugs, dadurch gekennzeichnet, daß in einem Wandbereich (1) des Bauteils ein in eine Erweiterung (10) mündendes Langloch (9) vorgesehen ist, daß das Zugglied (3) mit einem in die Erweiterung (10) einsteckbaren Rastkopf (5) am der Erweiterung (10) abgewandten Ende des Langloches (9) sitzt und mit Randbereichen (11, 12) auf der dem Zugglied (3) abgewandten Seite des Wandbereiches (1) über die Breite des Langloches (9) ragt und daß an dem Rastkopf (5) eine elastische Lasche (7) mit einem in die Erweiterung (10) greifenden Sicherungsnoppen (6) vorgesehen ist.

2. Bauteil nach Anspruch 1, dadurch gekennzeichnet, daß der Rastkopf (5) und der Sicherungsnoppen (6) von oben gesehen rechteckig sind und die Erweiterung (10) entsprechend rechteckigen Querschnitt hat und mit dem Langloch (9) einen T-förmigen Durchlaß bildet.

3. Bauteil nach Anspruch 1 oder einem der folgenden, dadurch gekennzeichnet, daß der Rastkopf (5) koaxial zur Längsachse des Zuggliedes (3) angeordnet ist und die Lasche (7) mit dem Sicherungsnoppen (6) quer dazu in einem rechten Winkel zum Zugglied (3) verläuft.

4. Bauteil nach Anspruch 1 oder einem der folgenden, dadurch gekennzeichnet, daß das Langloch (9) mit der Erweiterung (10) in einer nach innen gerichteten Verprägung (2) des Wandbereiches (1) vorgesehen ist.

5. Bauteil nach Anspruch 1 oder einem der folgenden, dadurch gekennzeichnet, daß im Abstand des Sicherungsnoppens (6) vom Rastkopf (5) neben der Erweiterung (10) in der Verprägung (2) ein um die Höhe des Sicherungsnoppens (6) tieferer Prägebereich (8) vorgesehen ist.

**Revendications**

1. Elément de construction auquel est fixé un organe de traction, en particulier élément de siège pour siège arrière de véhicule automobile, caractérisé en ce qu'un trou oblong (9) débouchant dans un élargissement (10) est prévu dans une portion de paroi (1) dudit élément de construction, que l'organe de traction (3) est logé à l'extrémité du trou oblong (9) opposée à l'élargissement (10) au moyen d'une tête de verrouillage (5) capable de pénétrer dans l'élargissement (10) et dépasse de la largeur du trou oblong (9) par des zones marginales (11, 12) sur le côté de la portion de paroi (1) opposé à l'élément de traction (3), et qu'une languette élastique (7) comportant un bouton de sûreté (6) s'engageant dans l'élargissement (10) est prévue sur la tête de verrouillage (5).

2. Elément de construction selon la revendication 1, caractérisé ence que la tête de verrouillage (5) et le bouton de sûreté (6) sont de forme rectangulaire en vue de dessus et l'élargissement (10) présente une section transversale de forme rectangulaire correspondante et forme un passage en T avec le trou oblong (9).

3. Elément de construction selon la revendication 1 ou 2, caractérisé en ce que la tête de verrouillage (5) est disposée coaxialement à l'axe longitudinal de l'organe de traction (3) et l'attache (7) comportant le bouton de sûreté (6) s'étend transversalement audit axe longitudinal en formant un angle droit par rapport à l'organe de traction (3).

4. Elément de construction selon l'une quelconque des revendications précédentes, caractérisé en ce que le trou oblong (9) comportant l'élargissement (10) est prévu dans un estampage (2), orienté vers le haut, de la portion de paroi (1).

5. Elément de construction selon l'une quelconque des revendications précédentes, caractérisé en ce qu'une zone emboutie (8) plus profonde que la hauteur du bouton de sûreté (6) est prévue dans l'estampage (2), à une certaine distance du bouton de sûreté (6) de la tête de verrouillage (5), à proximité de l'élargissement (10).

**Claims**

1. Prefabricated part with a pull member secured thereto, especially a seat part for a rearseat of a motor vehicle, characterised in that an elongated hole (9) opening into an enlargement (10) is provided in a wall region (1) of the prefabricated part, that the pull member (3) with a stop head (5), which is insertable into the enlargement (10), is seated at the end of the elongated hole (9) facing away from the enlargement (10) and with edge regions (11, 12) extends beyond the width of the elongated hole (9) on the side of the wall region (1) facing away from the pull member (3), and that the stop head (5) is provided with an elastic tongue (7) with a locking member (6) for insertion into the enlargement (10).

2. Prefabricated part according to claim 1, characterised in that the stop head (5) and the locking member (6) are rectangular when viewed from above, and the enlargement (10) has a corresponding rectangular cross-section and together with the elongated hole (9) forms a T-shaped perforation.

3. Prefabricated part according to claim 1 or one of the following claims, characterised in that stop head (5) is arranged coaxially to the longitudinal axis of the pull member (3), and the tongue (7) with the locking member (6) runs transversely to this at a right angle to the pull member (3).

4. Prefabricated part according to claim 1 or one of the following claims, characterised in that the elongated hole (9) with the enlargement (10) is provided in an inwardly directed stamping (2) of the wall region (1).

5. Prefabricated part according to claim 1 or one of the following, characterised in that at a distance of the locking member (6) from the stop head (5) in the stamping (2) next to the enlargement (10) a stamped area (8) is provided which is deeper by the height of the locking member (6).

Fig.1

Fig.2

Fig.3

Fig.4

2/2

Fig.5

Fig.6